# EUROPÄISCHE PATENTSCHRIFT

(11) **EP 3 760 547 B1**
(45) Veröffentlichungstag und Bekanntmachung des Hinweises auf die Patenterteilung: **07.09.2022**
(21) Anmeldenummer: 20183682.2
(22) Anmeldetag: 02.07.2020
(51) Int. Cl.: B64F 1/315, B64F 1/305, B64F 1/31

(54) **FLUGZEUGTREPPE MIT HÖHENREGULIERUNG**
AIRCRAFT STEPS WITH HEIGHT ADJUSTMENT
ESCALIER D'AVION POUVANT ÊTRE RÉGLÉ EN HAUTEUR

(30) Priorität: 04.07.2019 EP 19184506
(43) Veröffentlichungstag der Anmeldung: 06.01.2021
(73) Patentinhaber: Krämer GmbH, 72555 Metzingen (DE)
(72) Erfinder: Losch, Max, 72820 Sonnenbühl-Genkingen (DE)
(74) Vertreter: Jeck, Anton

(56) Entgegenhaltungen:
- EP-A1- 3 412 580
- EP-A1- 3 511 251
- CN-U- 206 914 670
- DE-A1- 4 101 430
- DE-U1- 9 005 884
- US-A1- 2007 214 585

## Beschreibung

Die Erfindung betrifft eine Flugzeugtreppe nach dem Oberbegriff des Anspruchs 1, sowie ein Verfahren zur kontinuierlichen Anpassung der Höhe einer Plattform einer Flugzeugtreppe nach dem Oberbegriff des Anspruchs 12.

Durch das Be- und Entladen von Flugzeugen verändert sich die Höhe eines Flugzeugs, insbesondere des Flugzeugsrumpfs gegenüber einer Bodenebene. Bei einer angestellten Flugzeugtreppe muss ein Passagier diese Veränderung entweder überwinden oder die Flugzeugtreppe, insbesondere die Plattform der Flugzeugtreppe, über welche die Passagiere die Luke des Flugzeugs erreichen, muss der Höhe nach angepasst werden. Insbesondere bei großen Flugzeugen kann die Höhenveränderung mehr als 50 cm betragen, weswegen mit zunehmender Differenz zwischen Höhe der Plattform und der Höhe der Ausstiegsluke aus dem Flugzeug ein steigendes Sicherheitsrisiko für die Passagiere besteht.

Es sind Flugzeugtreppen bekannt, welche durch händische Anpassung der Plattform Höhe nach und nach an die sich verändernde Flugzeugeinstiegshöhe anpassbar sind.

Aus der DE 9005884 U1 ist eine fahrbare Flugzeugtreppe bekannt, welche die Positionierung des Fahrzeugs im Verhältnis zu einer Ladeluke oder Einstiegsluke vereinfachen soll. Dafür soll eine Einrichtung zur Feststellung der Position des Fahrzeugs relativ zur Luke bereitgestellt werden.

Dies erfordert jedoch intensiven Einsatz von Bodenpersonal und die ständige Aufmerksamkeit des selbigen, wann die Flugzeugtreppe erneut an die Höhe des Flugzeugrumpfs beziehungsweise an die Ausstiegshöhe an der Luke anzupassen ist. Ausgehend von dem obigen Stand der Technik, liegt der Erfindung die Aufgabe zugrunde, hier Abhilfe zu schaffen und die gattungsgemäße Flugzeugtreppe ohne unangemessenen konstruktiven Aufwand so weiterzubilden, dass mangelnde Aufmerksamkeit des Personals und Bedienungsfehler ausgeräumt werden.

Die gestellte Aufgabe wird erfindungsgemäß durch die Merkmale des Anspruchs 1 gelöst.

Eine Distanzmesseinrichtung ist ausgebildet, in einem Zustand, in dem die Flugzeugtreppe einem Flugzeug in betriebsgemäßer Ausrichtung zugestellt ist, kontaktfrei eine Veränderung des Abstands des Flugzeugrumpfs zur Bodenebene zu bestimmen und eine Steuereinrichtung vorgesehen, welche ausgebildet ist, die Verstelleinrichtung anzusteuern und weiter ausgebildet ist, mittels der Verstelleinrichtung die Höhe der Plattform an den bestimmten Abstand oder die bestimmte Veränderung des Abstands zur Bodenebene anzupassen.

Die Distanzmesseinrichtung arbeitet kontaktfrei, steht also nicht in Kontakt, insbesondere messendem Kontakt, mit dem Flugzeug Man erkennt, dass die Erfindung jedenfalls dann verwirklicht ist, wenn eine automatische Anpassung der Höhe (Abstand) der Plattform einer Flugzeugtreppe an eine bestimmte Höhe oder eine Veränderung der Höhe des Flugzeugsrumpfes von einer Bodenebene bewirkbar ist.

Die Bestimmung der Veränderung einer Höhe des Flugzeugrumpfs erfolgt durch eine aufwärtsgerichtete, beispielsweise eine lotrechte Messung, an einer Unterseite des Flugzeugrumpfs und/oder durch die ermittelte Veränderung der Distanz zwischen Distanzmesseinrichtung und Flugzeugrumpf oder auch eine Bestimmung der absoluten Distanz zwischen den selbigen bestimmt werden.

Besonders zweckmäßig ist dabei die Ausrichtung der Distanzmesseinrichtung auf einen unteren Bereich des Flugzeugs/Flugzeugrumpfs. Ein unterer Bereich des Flugzeugrumpfs kann insbesondere der Bereich sein, welcher sich vom tiefsten Punkt zu beiden Seiten hin in etwa 30 % des Rumpfumfangs ausmacht und/oder eine Oberflächentangente im Messpunkt am Flugzeugrumpf aufweist, welche bevorzugt einen Winkel gegenüber einer vertikalen Achse von mindestens 25°, bevorzugt 30°, besonders bevorzugt von mindestens 35° bis 70° und sogar bis 90° einschließt.

Eine gemessene Veränderung des Abstands zwischen Distanzmesseinrichtung und einer Unterseite des Flugzeugrumpfs steht in besonders günstiger Relation zur tatsächlichen Veränderung der Höhe des Flugzeugrumpfs gegenüber einer Bodenebene. Die Höhenlage des Distanzmessers kann dabei bekannt, insbesondere in der Elektronik der Flugzeugtreppe hinterlegt, sein. So kann durch Addition der gemessenen und der hinterlegten Höhe auch eine absolute Höhe des Flugzeugrumpfs über dem Boden bestimmbar sein.

Sofern in dieser Patentanmeldung der Flugzeugrumpf benannt ist, ist damit insbesondere die Unterseite des Flugzeugrumpfs gemeint, welche dem Boden bevorzugt zugewandt ist.

Die aufwärts gerichtete Distanzmesseinrichtung kann auch mit einem kleineren Winkel als 90° (gegenüber einer Bodenebene) auf den Flugzeugrumpf, insbesondere dessen Unterseite, gerichtet sein. Hierdurch ist es ermöglicht, eine Bestimmung des Abstands des Flugzeugrumpfs vom Boden und/oder eine Veränderung der Höhe/des Abstands zu dem selbigen zu bestimmen, ohne die Distanzmesseinrichtung (z. B. mittig) unterhalb des Flugzeugrumpfs anordnen zu müssen. Besonders zweckmäßig kann dabei ein Messwinkel der Distanzmesseinrichtung von vorzugsweise 30° bis 60°, besonders bevorzugt 45° (insbesondere +/- 10°) sein. Im angestellten Zustand kann dies einem Messpunkt an der Unterseite des Flugzeugrumpfs entsprechen, welcher einen Tangentialwinkel gegenüber einer Bodenebenennormalen (einer Senkrechten) von min 30°, bevorzugt 35° bis 55° (oder 60°), besonders bevorzugt 45° aufweist. Bei der Auswahl des Winkels kann es zweckmäßig sein darauf zu achten, dass die Distanzmesseinrichtung auf der Seite/Hälfte des Flugzeugrumpfs misst, welche der Distanzmesseinrichtung zugewandt ist.

Bei einer Messung an einem Abschnitt des Flugzeugrumpfs, welcher sich einer senkrechten Ausrichtung annähert, insbesondere <25°, kann das Messergebnis starkverfälscht beziehungsweise unbrauchbar sein, da eine Höhenveränderung des Flugzeugrumpfs zu keiner bzw. einer minimalen Veränderung des Messabstands führt. Auch bei Berücksichtigung eines Fehlerquotienten lässt sich so keine exakte Bestimmung der Höhenveränderungen des Flugzeugs durchführen, da eine für eine Messung benötigte Distanzveränderung praktisch entfällt. Die kann ein maßgeblicher Grund für eine Messung auf der Unterseite des Flugzeugrumpfs sein.

Es kann auch eine Kombination vorgesehen sein, bei welcher sowohl die Distanzmesseinrichtung zwar unter den Rumpf ragt, jedoch nicht mittig unterhalb des Rumpfs vorgesehen ist + Winkel der Distanzmesseinrichtung ≠ 90°. Für eine Bestimmung der Höhen(-veränderung) kann es zweckmäßig sein, den Winkel, den die Distanzmesseinrichtung mit einer Bodenebene einschließt zu kennen.

Durch Anwendung verschiedener (trigonometrischer) Rechenverfahren ist es möglich auf Grund der bestimmten Distanz zwischen Distanzmesseinrichtung und Unterseite des Rumpfs eine Veränderung der Höhe des Rumpfs, also der Unterseite des Flugzeugs, zu berechnen. Auf das Rechenverfahren im Einzelnen soll es dabei nicht ankommen und ist für die Erfindung auch nicht wesentlich. Beispielhaft sollen nachfolgend zwei (nicht beschränkende) Möglichkeiten zur Bestimmung einer Höhenveränderung und einer Höhe/Abstand des Flugzeugrumpfs zum Boden angeführt werden.

### Beispiel 1:

Bei einem bekannten Winkel den die Distanzmesseinrichtung mit einer Bodenebene einschließt kann mittels einer trigonometrischen Standardfunktion, beispielsweise dem cos oder arccos, auf Grund der gemessenen Distanz zwischen Rumpf und Distanzmesseinrichtung ein Abstand des gemessenen Punkts am Rumpf zu einer Bodenebene Bestimmt werden, sofern der Abstand der Distanzmesseinrichtung vom Boden bekannt ist. Dabei kann ein empirisch ermittelter Faktor, welcher beispielsweise zwischen 2,1 und 2,9 liegen kann, mit dem Ergebnis der trigonometrischen berechnung multipliziert werden, um einer von der Kreisform abweichenden Form des Flugzeugsrumpfs Rechnung zu tragen.

Der Faktor dient dabei lediglich einer Optimierung. Es wurde erkannt, dass die Flugzeuge mit großem Rumpf und langen Hubwegen eine dem Kreis ähnlichere Form Im Bereich Ihrer Unterseite aufweisen. Die Nähe zur Kreisform kompensiert dabei Fehler, die aufgrund der langen Hubwege auftreten könnten.

Kleinere Flugzeuge weisen in der Regel eine stärker von der Kreisform abweichende Rumpfform auf Ihrer Unterseite auf. Diese Abweichung fällt jedoch auf Grund der geringeren Hubwege nicht so sehr ins Gewicht.

Es wurde erkannt, dass auf Grund dieses Umstands einfache trigonometrische Berechnungen für die Bestimmung einer Höhe(nveränderung) ausreichen.

### Beispiel 2:

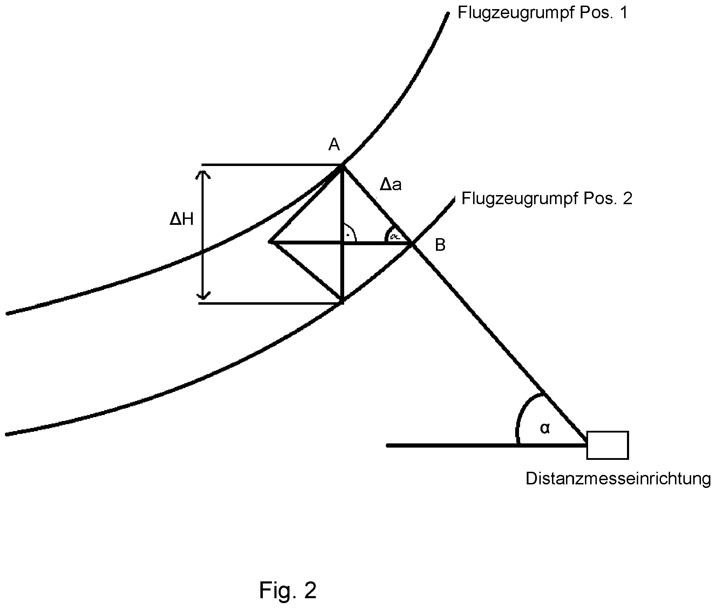

Eine Veränderung der Höhe des Flugzeugs führt zu einer Verkürzung oder Verlängerung der gemessenen Distanz vom Rumpf zur Distanzmesseinrichtung (Δa; Fig. 2). Bei bekanntem Abstrahlwinkel α der Messeinrichtung lässt sich ein geometrischer Drachen aufspannen, bei welchem die beiden Schnittpunkte A, B des Rumpfs mit der Messachse der Distanzmesseinrichtung einen Schenkel des Drachen und die Veränderung der Höhe (ΔH) des Flugzeugrumpfs eine der Diagonalen des Drachen bildet.

Die Diagonalen in dem Drachen bilden 4 rechtwinklige Dreiecke. Zumindest bei einem der Dreiecke ist sowohl eine Seitenlänge als auch ein weiterer Winkel bekannt, der dem Messwinkel α der Distanzmesseinrichtung entspricht. Durch schrittweise Anwendung von standard-trigonometrischer Funktionen wie beispielsweise sin, cos und tan lassen sich sukzessive alle Längen und Winkeln in dem Drachen bestimmen und somit auch die Höhenveränderung, die der einen Diagonalen des Drache entspricht.

Diese Mess- und Berechnungsmethode kann auch zur Bestimmung einer absoluten Höhe eines Punktes am Flugzeugrupf verwendet werden. Dabei entspricht die Messdistanz einem Schenkel des Drachen und die Höhendiagonale entspricht dem Höhenabstand zwischen Distanzmesseinrichtung und gemessenem Punkt + dem Abstand der Distanzmesseinrichtung vom Boden. Sollte nicht im tiefsten Punkt des Rumpfs (z.B. unterhalb der Flugzeugtreppe) gemessen werden, kann der Höhenunterschied zwischen Messpunkt und tiefsten Punkt bei der Bestimmung einer Absoluten Höhen noch vom Messergebnis abgezogen werden.

Da bevorzugt immer unter demselben Winkel gemessen wird, kann der Messpunkt am Rumpf bekannt und ein Unterschied in der Höhe des Messpunkts zum tiefsten Punkt des Rumpfs in der Treppenelektronik hinterlegt sein. Durch Auswahl eines entsprechenden Flugzeugtyps lässt sich so die Höhe der Unterseite (des tiefsten Punkts im Bereich der Messung) des Flugzeugrumpfs bestimmen, also dem tiefsten Punkt des Rumpfs welcher bei einem Querschnitt quer zur Längsachse des Flugzeugs beim Messpunkt vorliegt.

Alternativ kann durch eine Distanzmessung an einem flugzeugtypabhängigen und bekannten Messpunkt am Flugzeugrumpf eine flugzeugtypanhängige Höhe der Flugzeugluke bestimmt werden, da diese in Bezug auf den Messpunkt einen festen vordefinierten Höhenabstand bei gleichbleibender Flugzeuggeometrie aufweist. Es wird also zunächst die Höhe des Messpunktes bestimmt und davon die Höhe der Luke, insbesondere der Lukenschwelle, abgeleitet (aufaddiert).

Soweit für verschiedene Flugzeugtypen deren jeweils gemessener Punkt an der Unterseite des Rumpfs unterhalb der Flugzeugluke bekannt ist und darüber hinaus auch der Höhenunterschied zwischen dem gemessenen Punkt und dem tiefsten Punkt des Rumpfs im Bereich der Messung bekannt ist, kann auch eine absolute Höhenbestimmung erfolgen, obwohl nicht zwingend mittig am Rumpf eine Messung erfolgt. Die Bestimmung der absoluten Höhe eines Punkts des Flugzeugrumpfs kann, insbesondere zur Einstellung einer ersten/initialen Höhe der Flugzeugtreppe gegenüber der Flugzeugtür, auch durch eine in der Flugzeugtreppenelektronik hinterlegte Standardhöhe für bestimmten/vordefinierte Flugzeugtypen ergänzt oder ersetzt werden. So kann die Flugzeugtreppe schon bereits während einer Anfahrt zu dem Flugzeug in etwa auf eine zweckmäßige Betriebshöhe eingestellt werden. Anschließend kann durch eine absolute Höhenbestimmung des Rumpfs, insbesondere an einem Punkt unterhalb der zugestellten Flugzeugluke, in oben beschriebener Weise eine Anpassung der Flugzeugtreppenhöhe auf die tatsächlich notwendige Höhe, auf Grund der tatsächlichen Beladung des Flugzeugs, erfolgen. Anschließend kann einer Erfassung der Höhenveränderung ausreichend sein, eine Anpassung der Flugzeugtreppe an die veränderte Höhenlage der Flugzeugluke zu ermöglichen.

Die Bestimmung der absoluten Höhe des Flugzeugsrumpfes von einer Bodenebene kann ebenfalls durch eine lotrechte Messung am Flugzeugrumpf erfolgen, wobei der Abstand zwischen Distanzmesseinrichtung und Bodenebene in der Steuereinrichtung hinterlegt sein kann. Dies kann einer besonders exakten Bestimmung der Höhe des Flugzeugs vom Boden zuträglich sein.

Eine besonders exakte Bestimmung der Höhenveränderung kann aber für die gestellte Aufgabe unnötig sein. Die Bestimmung der Veränderung der Höhe kann auch durch eine Messung am Flugzeugrumpf mittels einer schrägen Messung erfolgen, also einer Messung welche nicht lotrecht erfolgt. Dabei kann die Distanzmesseinrichtung mit der Bodenebene einen Winkel α einschließen, welcher von einem 90° Winkel, also einem lotrechten Winkel abweichen kann. Da der Winkel α vorbestimmt sein kann und bekannt ist, die Distanz zwischen der Distanzmesseinrichtung und dem Flugzeugrumpf bestimmbar ist und der Abstand der Distanzmesseinrichtung von einer Bodenebene ebenfalls bekannt ist, kann eine Höhe vom gemessenen Punkt am Flugzeugrumpf zur Bodenebene bestimmt werden.

Es ist ebenfalls möglich den absoluten Abstand des Flugzeugrumpfs von einer Bodenebene mittels dieser Messung mit dem Winkel α zu bestimmen. Die äußere Form eines Flugzeugsrumpfes weist eine standardisierte Kontur auf, welche in Abhängigkeit von der Flugzeugklasse demselben geometrischen Formenverlauf folgt. In der Steuereinrichtung (Elektronik) können Informationen über die einzelnen Flugzeugklassen und ihre äußere Formgebung hinterlegt sein. Soweit der entsprechende Flugzeugtyp der Steuereinrichtung mitgeteilt wird, beziehungsweise dieser aus einer Datenbank ausgewählt wird, kann die Steuerungseinrichtung bei der Bestimmung des absoluten Abstands des Flugzeugrumpfs von einer Bodenebene die Höhendifferenz zwischen dem Messpunkt und dem tiefsten Punkt des Flugzeugrumpf, welcher für den absoluten Abstand des Flugzeugrumpf im Messbereich von der Bodenebene maßgeblich ist, berücksichtigen. Die bei einem gegebenen Messungswinkel α vermessene Position an einem Flugzeug und dessen Abstand zu einem tiefsten Punkt des Flugzeugrumpfs im Messungsbereich, vorzugsweise im Messungsquerschnitt durch das Flugzeug (eine Querschnitt am Messungspunkt quer zur Längsachse des Flugzeugs) kann in Abhängigkeit vom Flugzeugtyp und dessen hinterlegter äußerer Geometrie ebenfalls bestimmbar sein.

Eine Bestimmung der Höhe eines gemessenen Punkts an der Außenhülle des Flugzeugs, beispielsweise eine Höhe einer Ausstiegsluke, insbesondere dem unteren Rand der Ausstiegsluke kann basierend auf dem Messungswinkel und der äußeren Geometrie des Flugzeugs ebenfalls bestimmbar sein. Im angestellten Zustand kann die Treppe grundsätzlich einen festgelegten Abstand zum Flugzeug aufweisen. Dadurch kann die Ausrichtung der Distanzmesseinrichtung gegenüber dem Flugzeug vordefiniert sein. Basierend auf der äußeren Flugzeuggeometrie und der Ausrichtung der Distanzmesseinrichtung gegenüber dem Flugzeug kann gemessene Distanz zwischen Distanzmesseinrichtung und Flugzeugaußenhaut direkt in eine Höhe des Flugzeugs gegenüber einer Bodenebene umgerechnet werden. Diese Information kann verwendet werden um eine initiale Höheneinstellung der Flugzeugtreppe zu bewirken. Im Laufe des Be- und Entladens kann die Distanzmesseinrichtung einen sich verändernden Abstand zu der Flugzeugaußenhaut feststellen, wobei diese Distanzänderung vorzugsweise basierend auf der hinterlegten Geometrie in eine Änderung der Höhe des Flugzeugs von einer Bodenebene umgerechnet werden kann.

Da bei einem bestimmten Flugzeugtyp aufgrund des festgelegten Winkels α die Abstandsbestimmung grundsätzlich immer an derselben Stelle erfolgt, da sich auch die Flugzeugluke bei diesem Flugzeugtyp grundsätzlich immer an derselben Stelle befindet, lässt sich so aufgrund des Abstands zwischen dem schrägen Messpunkt an dem Flugzeugrumpf und der Distanzmesseinrichtung einen Abstand des Flugzeugrumpfs von der Bodenebene bestimmen.

Die Geometrie des Flugzeugrumpfs kann dazu führen, dass bei einem abnehmenden Abstand des Flugzeugrumpfs von der Bodenebene der Abstand des Flugzeugrumpfs von der schräg angeordneten Distanzmesseinrichtung auch zunimmt. Aufgrund der hinterlegten Geometrie in der Steuereinrichtung, des festgelegten Winkels α und der grundsätzlich gleichbleibenden horizontalen Ausrichtung der Flugzeugtreppe an einem bestimmten Flugzeugtyp, kann auch bei einem zunehmenden Abstand zwischen Distanzmesseinrichtung und Rumpf ein abnehmender Abstand zwischen Flugzeugrumpf und Distanzmesseinrichtung bestimmbar sein.

Es kann daher vorteilhaft sein, insbesondere bei einer Distanzmessung unter einem Winkel α ungleich 90° der Steuereinrichtung mitzuteilen, an welchen Flugzeugtyp die Flugzeugtreppe angestellt ist. Grundsätzlich kann auch an der Flugzeugtreppe eine Vorrichtung vorgesehen sein, welche die äußere Form beziehungsweise Geometrie des Flugzeugs analysiert und basierend auf der Analyse eine Umrechnung ermöglicht, wie die Veränderung der gemessenen Distanz zwischen Flugzeugrumpf und Distanzmesseinrichtung sich in einer tatsächlichen Höhenveränderung des Flugzeugrumpfs gegenüber einer Bodenebene ausdrückt.

Der Steuereinrichtung kann der Befehl erteilt werden, eine Höhe der Treppe, insbesondere der Plattform an eine Höhe des Flugzeugrumpfs, insbesondere der Ausstiegsluke, anzupassen. Hierdurch kann eine initiale Ausrichtung der Flugzeugtreppe an das Niveau des Flugzeugs erfolgen.

Weiterhin kann der Steuereinrichtung der Befehl erteilt werden, eine Änderung der Höhe der Treppe insbesondere der Plattform an eine Änderung der Höhe des Flugzeugrumpfs, insbesondere der Ausstiegsluke, anzupassen. Diese Anpassung kann gleichförmig oder inkrementell erfolgen.

Weitere zweckmäßige und vorteilhafte Ausgestaltungen der Erfindung gehen aus den Unteransprüchen hervor.

Nach einer bevorzugten Weiterbildung der Erfindung ist es vorgesehen, dass die Distanzmesseinrichtung auf einer Laufzeitmessung eines akustischen oder optischen Signals beruht. Die Distanzmesseinrichtung kann beispielsweise einen Laser-, Ultraschall- oder Infrarotmesseinrichtung aufweisen, welche vorzugsweise mit einem entsprechenden Sender und Empfänger sowie bevorzugt den notwendigen Einrichtungen zur Laufzeitmessung ausgestattet ist.

Die Distanzmesseinrichtung ist in einem unteren, bodennahen Bereich der Flugzeugtreppe, nämlich an deren Rahmen angeordnet, welcher die Kanzel und die Treppe trägt, also vorzugsweise wenige Zentimeter bis wenige Dezimeter über dem Boden angeordnet sein. Vorzugsweise ist dabei der Abstand der Distanzmesseinrichtung von der Bodenebene bekannt beziehungsweise in der Steuereinrichtung hinterlegt und beträgt vorzugsweise weniger als 1 m, besonders bevorzugt weniger als 50 cm.

Zweckmäßigerweise ist es nach einer Weiterbildung der vorliegenden Erfindung vorgesehen, dass die Distanzmesseinrichtung auf derselben Seite an der Flugzeugtreppe angeordnet ist wie die Plattform.

Nach einer bevorzugten Weiterbildung der vorliegenden Erfindung ist es vorgesehen, dass die Distanzmesseinrichtung an einer Verlängerung befestigt ist, welche im angestellten Zustand unter den Flugzeugrumpf ragt, sodass eine Messung zwischen Distanzmesseinrichtung und einer Unterseite des Flugzeugrumpfs, vorzugsweise dem tiefsten Punkt des Flugzeugrumpfs im Bereich der Flugzeugtreppe, ermöglicht ist.

Bei der Verlängerung kann es sich um ein längliches oder flächiges Element, insbesondere eine Stange, eine Platte oder einen Teil des Rahmens handeln, auf welcher die Distanzmesseinrichtung angeordnet sein kann. Vorzugsweise ist die Distanzmesseinrichtung an einem vorderen Ende der Verlängerung angeordnet und einem unteren Bereich des Flugzeugrumpfs, vorzugsweise einem Scheitelpunkt der gewölbten Flugzeugrumpfunterseite schräg aufwärtsgerichtet oder lotrechte zustellbar.

Eine sinnvolle Messung, insbesondere zur Änderung der Distanz des Flugzeugrumpfs von einer Bodenebene, ist jedoch grundsätzlich auch dann ermöglicht, wenn nicht der Scheitelpunkt selbst sondern ein anderer Bereich der Unterseite des Flugzeugrumpfs durch die Distanzmesseinrichtung an der Verlängerung vermessen wird, wie bereits voranstehend erläutert wurde.

Besonders bevorzugt ist es nach einer Weiterbildung der Erfindung, dass eine Messrichtung der Distanzmesseinrichtung senkrecht oder schräg aufwärtsgerichtet zum Flugzeugrumpf ausgerichtet ist. Diese senkrechte beziehungsweise lotrechte oder schräg aufwärtsgerichtet Ausrichtung der Distanzmesseinrichtung zum Flugzeugrumpf ermöglicht eine Bestimmung des Abstands des Flugzeugrumpfs von einer Bodenebene beziehungsweise eine Veränderung des Abstands in besonders einfacher Weise.

Zweckmäßigerweise ist es nach einer Weiterbildung der Erfindung vorgesehen, dass eine Messrichtung der Distanzmesseinrichtung mit der Bodenebene einen Winkel kleiner 90° in Richtung des Flugzeugrumpf einschließt, wobei die Höhe oder die Veränderung der Höhe unter Berücksichtigung des Winkels bestimmbar ist. Einer Messung des Abstands mit einem Winkel kleiner 90° kann die Distanzmesseinrichtung direkt an der Flugzeugtreppe oder an der Verlängerung vorgesehen sein. Bei einer Messung mit einem Winkel kleiner 90° kann es vorteilhaft sein, den Winkel zu kennen, welcher die Messeinrichtung mit der Bodenebene einschließt und die äußere Kontur des Flugzeugs in der Steuereinrichtung hinterlegt ist, wodurch sowohl eine absolute Höhenbestimmung des Scheitelpunktes Rumpfes bestimmbar ist, obwohl nicht zwingend am Scheitelpunkt gemessen wird, als auch eine Veränderung der Höhe des Flugzeugrumpfs gegenüber der Bodenebene.

Besonders bevorzugt ist es nach einer Weiterbildung der Erfindung, dass die Verstelleinrichtung, hydraulisch, pneumatisch oder mechanisch ausgebildet ist.

Zweckmäßigerweise kann es vorgesehen sein, dass die Verlängerung aus- und einfahrbar ist. Hierdurch kann eine Anpassung der Ausfahrlänge der Verlängerung an den jeweiligen Flugzeugtyp erfolgen. Beispielsweise kann durch Eingabe des Flugzeugtyps in der Steuereinrichtung automatisch eine Veränderung der ausgefahrenen Länge der Verlängerung erfolgen, sodass beispielsweise die Distanzmesseinrichtung bevorzugt Unterhalb des Flugzeugs, besonders bevorzugt unterhalb des Scheitelpunkts des Flugzeugrumpfs angeordnet ist.

Da die Flugzeugtreppe selbst durch den unmittelbar bevorstehenden Kontakt mit dem Flugzeugrumpf im Bereich der Luke fest ausgerichtet ist, kann für jeden Flugzeugtyp eine Länge der Verlängerung hinterlegt werden, um welche die Verlängerung ausgefahren werden muss, sodass die Distanzmesseinrichtung an der Verlängerung sich vorzugsweise unmittelbar in der lotrechten unterhalb des Scheitelpunktes des Flugzeugrumpfs befindet.

Dabei ist festzustellen, dass nicht unbedingt eine Erfassung des Abstands am Scheitelpunkt erfolgen muss sondern auch eine Länge der Verlängerung in der Steuereinrichtung hinterlegt sein kann, welche lediglich die Verlängerung mit der Distanzmesseinrichtung in einen Bereich unterhalb des Flugzeugrumpfs bewegt ohne dabei bis zum Scheitelpunkt des Flugzeugrumpfs vorzudringen. Auch in einem solchen Bereich ist eine sinnvolle Messung möglich, wie bereits voranstehend ausgeführt wurde.

Ist die gewünschte Position der Verlängerung inklusive Distanzmesseinrichtung unterhalb des Flugzeugrumpfs erreicht, kann es nach einer Weiterbildung der Erfindung zweckmäßig sein, dass die Verlängerung in einer gewünschten Position für eine Messung festlegbar ist. Dadurch könne nachteilige Veränderung der Position der Verlängerung während der Messung vorgebeugt werden.

Besonders bevorzugt ist es vorgesehen, dass eine zweite Distanzmesseinrichtung, vorzugsweise in Bereich der Plattform vorgesehen ist, welche einen Abstand der Plattform von der Bodenebene bestimmt/misst. Grundsätzlich kann die Steuerung der Flugzeugtreppe ausgebildet sein, aufgrund einer Stellung der Mittel zur Höhenanpassung der Flugzeugtreppe eine Höhe der Plattform zu bestimmen (wie weit z.B. ein Stellzylinder ausgefahren ist oder anhand der Umdrehungen einer Höhenverstellbaren Spindel). Es kann jedoch von Vorteil sein, die voranstehend genannten Maßnahme zu ergreifen, da es bei der Bestimmung der Höhe der Plattform basierend auf der Stellung der Mittel zur Höhenverstellung auch zu unerwünschten Abweichungen kommen kann. So kann eine exakte Bestimmung der jeweiligen Lage/Höhe der Plattform zu jedem Zeitpunkt gewährleistet sein.

Basierend auf einer bestimmten Veränderung oder einer Absolutmessung der Höhe des Flugzeugrumpfs gegenüber der Distanzmesseinrichtung oder der Bodenebene kann die Höhe der Plattform gegenüber der Bodenebene um denselben oder einen ähnlichen Höhenbetrag anpassbar sein. Dieser Vorgang kann inkrementell oder stufenlos, insbesondere automatisch erfolgen. Dabei kann die zweite Distanzmesseinrichtung ausgebildet sein, die Höhe der Plattform gegenüber einer Bodenebene zu bestimmen. Die Regelung der Steuereinrichtung kann ausgebildet sein, eine Differenz zwischen den Distanzen der einzelnen Distanzmesser Einrichtungen beziehungsweise eine Veränderung der Distanz, die durch die erste Messeinrichtung mit oder ohne Unterstützung der Regel oder Steuereinrichtung festgestellt wurde, in eine Veränderung der Höhe der Plattform umzusetzen. Dabei kann eine Änderung der Höhe der Plattform so lange erfolgen, beispielsweise mittels der Regeleinrichtung beziehungsweise Steuereinrichtung, bis die zweite Distanzmesseinrichtung dieselbe oder eine ähnliche Höhenveränderung der Plattform feststellt, wie durch die erste Messeinrichtung zwischen Boden und Flugzeugrumpf bestimmt wurde.

Dies ist ein kontinuierlicher Prozesss mit einer ständigen Anpassung der Höhe der Plattform an die Veränderung der Höhe des Flugzeugrumpfs gegenüber dem Boden oder der Distanzmesseinrichtung. Vorzugsweise werden dabei Höhendifferenzen durch die erste und zweite Distanzmesseinrichtung gemessen oder bestimmt beziehungsweise durch die entsprechende Steuer- und/oder Regeleinrichtung bestimmt beziehungsweise in eine Pfändung der Plattform umgesetzt.

Eine initiale Höheneinstellung der Plattform der Flugzeugtreppe gegenüber einer Einstiegsluke kann beispielsweise händisch erfolgen. Hierbei kann es vorteilhaft sein, dass eine berührungslose jedoch sichtbare Markierung, wie beispielsweise eine Lasermarkierung ausgehend von einem Bereich der Flugzeugtreppe, vorzugsweise der Plattform, die Ausrichtung der Plattform gegenüber der Flugzeugluke an der Flugzeugluke beziehungsweise im Bereich der Flugzeugluke markieren kann. Dabei kann sowohl eine vertikale also eine horizontale Ausrichtung der Flugzeugtreppe durch eine beispielsweise lineare Lasermarkierung oder andere sichtbare, berührungslose (lineare) Markierung bereitgestellt sein, welche vorzugsweise in einem unteren Bereich der Luke beziehungsweise im seitlichen Bereich der Luke, vorzugsweise bündig mit dieser, darstellbar ist, vorzugsweise wenn die Plattform gegenüber der Einstiegsluke optimal ausgerichtet ist. Die Höheneinstellung kann anschließend durch entsprechende Betätigung eines Einstellmittels, wie einem Hebel oder einem Knopf zur Betätigung mechanischer Einstellmittel erfolgen.

Soweit es sich bei den Mitteln zum Anzeigen einer Ausrichtung der Flugzeugtreppe an dem Flugzeug um eine Projektion, wie beispielsweise eines Laserstrahl handelt, kann diese in Abhängigkeit von einer Distanz der Flugzeugtreppe zum Flugzeug beim Annähern der Flugzeugtreppe an das Flugzeug Anschaltbar sein. Eine vertikale Markierung kann insbesondere eine seitliche Ausrichtung der Flugzeugtreppe gegenüber dem Flugzeug unterstützen. Eine horizontale Markierung kann insbesondere eine Ausrichtung der Flugzeuge gegenüber dem Flugzeug der Höhe nach unterstützen.

Bei den Mitteln zur Höheneinstellung kann es sich beispielsweise um eine hydraulische Einrichtung oder um eine Spindel handeln, mittels welcher eine Höhe der Flugzeugtreppe vorzugsweise stufenlos einstellbar und veränderbar ist.

Die Erfindung ist durch eine Distanzmesseinrichtung (29) gekennzeichnet, welche in einem unteren, nämlich bodennahen Bereich der Flugzeugtreppe, nämlich an deren Rahmen, angeordnet und von dem unteren Bereich aufwärts messend ausgerichtet ist, in einem Zustand, in dem die Flugzeugtreppe einem Flugzeug in betriebsgemäßer Ausrichtung zugestellt ist, kontaktfrei an einer Unterseite des Flugzeugrumpfs einen Abstand des Flugzeugrumpfs (25, 26) des Flugzeugs, insbesondere einen Abstand im Messpunkt, von der Bodenebene (30) und/oder eine Veränderung des Abstands des Flugzeugrumpfs zur Bodenebene (30) zu bestimmen und einer Steuereinrichtung, welche ausgebildet ist, die Verstelleinrichtung (14) anzusteuern und weiter ausgebildet ist, mittels der Verstelleinrichtung die Höhe der Plattform (13) an den bestimmten Abstand oder die bestimmte Veränderung des Abstands zur Bodenebene (30) kontinuierlich anzupassen. Die Anpassung kann insbesondere erfolgen, nachdem die Flugzeugtreppe dem Flugzeug bereits zugestellt und zumindest ein erstes Mal der Höhe nach gegenüber dem Flugzeug ausgerichtet ist.

Eine betriebsgemäße Ausrichtung der Flugzeugtreppe gegenüber dem Flugzeug kann insbesondere darin bestehen, dass die Flugzeugtreppe gegenüber einer Luke des Flugzeugs ausgerichtet ist und vorzugsweise höchstens Korrekturen hinsichtlich einer Höhenanpassung der Flugzeugtreppe gegenüber der Luke für einen Ein- bzw. Ausstieg erforderlich sind.

Nach der vorliegenden Erfindung ist eine Flugzeugtreppe dem Flugzeug dann betriebsgemäß zugestellt, wenn diese in Ihrer finalen Position auf dem Flugfeld oder der Parkposition am Flugzeug angekommen ist. Eine Berührung des Flugzeugs ist dabei nicht vorgesehen.

Nach einer Weiterbildung der Erfindung ist es vorgesehen, dass die Distanzmesseinrichtung (29) mit lediglich einem Distanzmessmittel, insbesondere einem optischen Messensor, zur Bestimmung der Veränderung des Abstands des Flugzeugrumpfs zur Bodenebene (30) bereitgestellt ist.

Es ist vorgesehen, dass die Distanzmesseinrichtung (29) , insbesondere bei betriebsgemäßer Ausrichtung der Flugzeugtreppe gegenüber dem Flugzeug, auf eine Unterseite des Flugzeugrumpfs ausgerichtet ist.

Zweckmäßigerweise ist es vorgesehen, dass die Distanzmesseinrichtung (29) in einem Bereich des Rahmens, insbesondere an der Verlängerung, vorgesehen ist, welcher zumindest in dem Zustand, in dem die Flugzeugtreppe dem Flugzeug in betriebsgemäßer Ausrichtung, zugestellt ist, mit der Kanzel vertikal abschließt oder gegenüber dieser nach vorne übersteht.

Besonders bevorzugt ist es vorgesehen, dass die Verlängerung einen strukturellen Bestandteil des Rahmens bildet. Die Verlängerung ist auch bereits dann bereitgestellt, wenn der Rahmen der Flugzeugtreppe gegenüber den Vorderrädern in Richtung Flugzeug im angestellten Zustand vorsteht, mit der Kanzel vertikal abschließt, also lediglich einem Vorderrad gegenüber vorsteht oder gegenüber der Kanzel horizontal betrachtet näher zur Flugzeugmitte ausgerichtet ist als die Kanzel selbst. Dies kann sich insbesondere auf einen Zustand beziehen in welchem die Kanzel betriebsgemäß gegenüber der Flugzeugluke ausgerichtet ist. Im Herabgelassenen oder teilweise herabgelassenen zustand der Kanzel, kann dabei die Kanzel die Verlängerung auch überragen, also gegenüber dieser in Richtung Flugzeug vorstehen.

Die Erfindung wird nun anhand eines Ausführungsbeispiels näher erläutert.

Figur 1 zeigt eine Seitenansicht einer Flugzeugtreppe mit erfindungsgemäßer Distanzmesseinrichtung.

Figur 2 zeigt den geometrischen Drachen, welcher im Zusammenhang mit einer der Berechnungsmethoden zur Bestimmung einer Höhe des Rumpfs und/oder der Bestimmung der Veränderung der Rumpfhöhe angewendet werden kann.

Die Flugzeugtreppe 10 weist eine schräggestellte Treppe 11 mit Seitengeländer 12 auf, die am oberen Ende eine an das Flugzeug anstellbare Plattform 13 trägt. Die Flugzeugtreppe ist an einen beziehungsweise 2 angedeutete Flugzeugrumpfs unterschiedlicher Geometrie angestellt. Das Anstellen kann kontaktlos erfolgen, wobei der Abstand der Flugzeugtreppe bei kontaktloser Anstellung vordefinierten sein kann.

Die Plattform 13 kann durch Stützen 14 auf einem Grundgestell 5 abgestützt sein, wobei die Stützen eine Höhenverstellung der Treppe, insbesondere der Plattform 13, ermöglichen können. Alternativ hierzu kann eine höhenverstellbare Spindel oder ein Klappmechanismus vorgesehen sein, welche ein besonders bodennahes Herablassen der Treppe ermöglichen. Das Grundgestell 15 kann am vorderen Ende mindestens ein Rad 16 und in der Nähe des hinteren Endes mindestens zwei Räder 17 tragen, von denen nur das linke zu sehen ist. Mindestens eines der Räder, insbesondere der vorderen Räder 16, kann von einem Elektromotor angetrieben sein. Die horizontale Ausrichtung der Räder kann mittels einer Deichsel 18 veränderbar sein, wobei die hinteren Räder 17 über einen Drehtisch mit der Deichsel 18 in Verbindung stehen können.

Somit kann ein horizontales Ausrichten beziehungsweise ein horizontales Verändern der Position der Deichsel eine Änderung der Ausrichtung der nicht-angetriebenen Räder unmittelbar zur Folge haben. Alternativ hierzu kann bei mindestens zwei angetriebenen Rädern ein Richtungswechsel durch unterschiedliches Antreiben der einzelnen Räder bewirkt werden, wie voranstehend beschrieben wurde. Hierbei kann auf eine bewegliche Deichsel verzichtet werden, wobei vorzugsweise frei drehbare nicht-angetriebene Räder als hintere Räder 17 vorsehbar sind.

Ein Elektromotor 20 kann mit mindestens einem der vorderen Räder 16 in antreibender Verbindung stehen und kann vorzugsweise von einem auf dem Grundgestell 15 befestigten Akkumulator 19 über einen Funkempfänger 21 mit Antenne 11 gespeist werden. Der Funkempfänger 21 kann die von einer nicht dargestellten Steuervorrichtung des Betreibers, beispielsweise eines Mobiltelefons, ausgehenden Funkwellen empfangen, die nach einem wählbaren Programm, beispielsweise einer entsprechenden App, kodiert sind. So lassen sich die Fahrgeschwindigkeit und/oder die Richtung beziehungsweise Richtungsänderung der Flugzeugtreppe einstellen und/oder verändern.

Der mit der Steuervorrichtung ausgerüstete Betreiber kann sich auf die Treppe 10 stellen und mit der Hand über die Deichsel 18 die beiden hinteren Räder 17 in Richtung auf das Flugzeug einstellen. Dies ist insbesondere dann zweckdienlich, wenn nur ein angetriebenes vorderes Rad 16 vorgesehen ist oder die einzelnen angetriebenen Räder nicht unterschiedlich angesteuert werden, um die Richtungsänderung zu bewirken. Dann kann der Betreiber mit der Steuervorrichtung den Elektromotor einschalten und zum Flugzeug fahren. Dort kann er die Flugzeugtreppe über die Steuervorrichtung bzw. mit der Hand zum Flugzeug lenken.

In einem vorderen Bereich des Grundgestells 15, welches auch als Rahmen bezeichnet werden kann eine Verlängerung 24 vorgesehen sein, an welcher ein Distanzmessgerät 29 angeordnet sein kann. Dieses kann vorzugsweise an einem von dem Rahmen 15 entfernten Ende der Verlängerung 24 angeordnet sein. Die Verlängerung kann gegenüber dem Rahmen 15 ein und ausfahrbar sein.

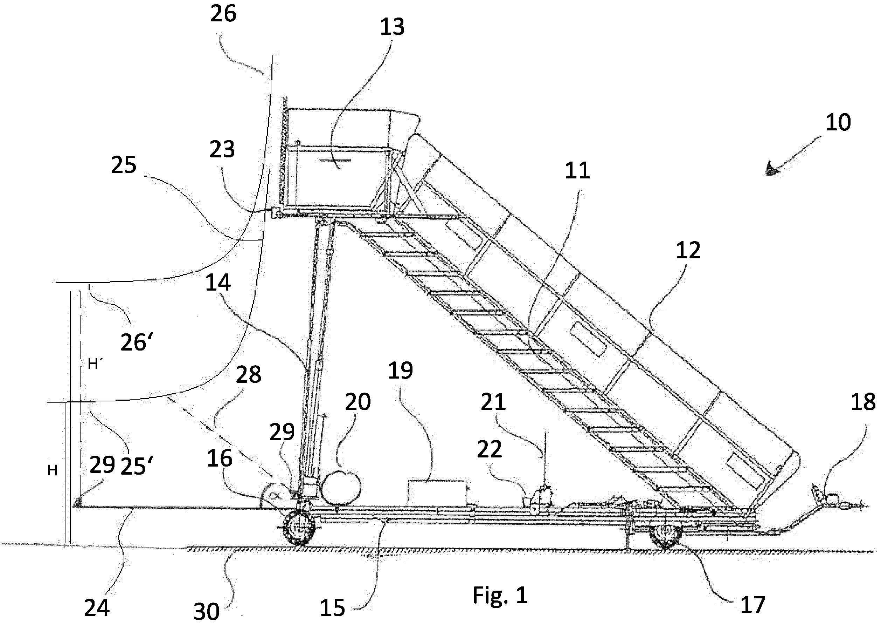

Wie aus Figur 1 hervorgeht kann die Distanzmesseinrichtung 29 an der Verlängerung 24 so ausgerichtet sein, dass sie in einem 90° Winkel senkrecht nach oben einen Abstand zu dem Flugzeugrumpf messen kann. Durch die unantastbare Länge der Verlängerung 24 gegenüber dem Rahmen 15 kann ein beliebiger Punkt des Flugzeugrumpfs im Querschnitt zur Längsachse des Flugzeugs vermessen werden. Dabei kann ein Abstand zwischen der Distanzmesseinrichtung und dem vermessenen Punkt des Flugzeugrumpfs bestimmt werden. Aufgrund des hinterlegten Abstands der Verlängerung 24 von einer Bodenebene 30 lässt sich auch der absolute Abstand des Flugzeugrumpfs vom Boden bestimmen.

Die Distanzmesseinrichtung 29 ist direkt an dem Rahmen 15 angeordnet. Wie ebenfalls aus Figur 1 hervorgeht, können die beiden Positionen der Distanzmesseinrichtung entweder alternativ oder ergänzend zu einander erfolgen. Es können demnach auch 2 Distanzmesser vorgesehen sein, wobei ein Distanzmesser eine lotrechte Messung vornehmen kann und der andere Distanzmesser eine schräge Messung vornehmen kann.

Der Distanzmesser 29, welche an dem Rahmen 15 oder zumindest bodennahe an der Flugzeugtreppe 10 angeordnet ist, hat seine Messrichtung nicht senkrecht oder waagerecht sondern unter einem Winkel a, welcher von einer lotrechten beziehungsweise einem 90° Winkel zur Bodenebene abweicht. Der Steuereinrichtung kann der Winkel α bekannt sein, weswegen der Abstand des vermessenen Punkts des Rumpfes von der Messebene bestimmbar ist. Die Messebene kann insbesondere eine Ebene sein, welche parallel zur Bodenebene auf Höhe der Messeinrichtung verläuft

Aufgrund der hinterlegten Höhe der Distanzmesseinrichtung 29 von der Bodenebene 30 lässt sich eine absolute Höhe des gemessenen Punkts unter dem Winkel α von der Bodenebene 30 bestimmen. Die Bestimmung der absoluten Höhe des Scheitelpunktes des Rumpfes kann so ebenfalls bestimmt werden, da aufgrund des festgelegten Winkels α und einer Angabe des Flugzeugtyp an die Steuereinrichtung der Höhenunterschied des Messpunkts von der Distanzmesseinrichtung zu dem Scheitelpunktes Rumpfes, insbesondere aufgrund einer hinterlegten Flugzeuggeometrie, bekannt sein kann und somit von der bestimmten Höhe des Messpunkts des Flugzeugrumpfs abgezogen werden kann. Dadurch wird die Höhe des Scheitelpunktes des Rumpfes von der Bodenebene bestimmbar, soweit ebenfalls der Abstand der Distanzmesseinrichtung von der Bodenebene 30 hinterlegt ist.

Für eine Veränderung der Höhe des Flugzeugrumpfs von der Bodenebene kann es bei einer schrägen Messung unter dem Winkel α zweckmäßig sein, die äußere Formgebung des Flugzeugrumpfs im Bereich der Messung wie sie beispielsweise in Figur 1 mit den Bezugszeichen 25 und 26 für 2 unterschiedliche Flugzeugtypen dargestellt ist, zu hinterlegen. Durch das Anstellen der Kanzel beziehungsweise Plattform 13 im Bereich der Luke des Flugzeugs ist der Bereich, in welchem die Distanzmessung unter dem Winkel α entlang des Flugzeugs erfolgt, vordefiniert. Dadurch ist in dem zu messenden Bereich die äußere Kontur bekannt und in der Steuereinrichtung hinterlegt. Vorzugsweise können auch Flugzeugrumpfgeometrie zu verschiedenen Lukenpositionen (vordere Luke, hintere Luke) hinterlegbar sein.

Basierend auf der bestimmten Höhe, also dem Abstand des Flugzeugrumpfs von der Bodenebene oder der Höhe der Messeinrichtung kann eine Höhe der Plattform 13 der Flugzeugtreppe 10 so einstellbar sein, dass ein möglichst ebener Ausstieg aus der Flugzeuglupe auf die Plattform 13 erfolgen kann. Dabei kann die Höhe der Plattform an die Höhe der Luke, insbesondere einen unteren Rand der selbigen, anpassbar sein.

Durch das Ent- oder Beladen des Flugzeugs beziehungsweise das Ein oder Aussteigen von Passagieren kann sich die Höhe des Flugzeugs relativ zur Treppe verändern. Diese Höhenveränderung ist in voranstehend beschriebener Weise durch die Distanzmesseinrichtung 29 lotrechten oder mit Winkel α bestimmbar. Die Steuereinrichtung kann ausgebildet sein einer Anpassung der Höhe der Plattform 13 an das sich ändernde Flugzeugniveau, also die Höhe des Flugzeugrumpfs gegenüber der Bodenebene 30 und damit der Ausstiegsluke gegenüber der Plattform 13 anzupassen. Diese Anpassung kann entweder kontinuierlich oder inkrementell erfolgen.

Dadurch wird erfindungsgemäß ein während des gesamten Ein- oder Ausstiegs beziehungsweise des Ent- oder Beladens komfortabler Einstieg oder Ausstieg zwischen Luke und Plattform ermöglicht.

## Patentansprüche

1. Flugzeugtreppe (10) mit einer Plattform (13) und
einer Verstelleinrichtung (14), welche ausgebildet ist, die Höhe der Plattform (13) gegenüber einer Bodenebene (30) anzupassen
**gekennzeichnet durch**,
eine Distanzmesseinrichtung (29), welche in einem unteren, bodennahen Bereich der Flugzeugtreppe, nämlich an deren Rahmen (15) angeordnet und von dem unteren Bereich aufwärts messend auf eine Unterseite des Flugzeugrumpfs ausgerichtet ist, in einem Zustand, in dem die Flugzeugtreppe einem Flugzeug in betriebsgemäßer Ausrichtung zugestellt ist, kontaktfrei an einer Unterseite des Flugzeugrumpfs, welche der Bodenebene (30) zugewandt ist, eine Veränderung des Abstands des Flugzeugrumpfs zur Bodenebene (30) zu bestimmen und
eine Steuereinrichtung, welche ausgebildet ist, die Verstelleinrichtung (14) anzusteuern und weiter ausgebildet ist, mittels der Verstelleinrichtung die Höhe der Plattform (13) an den bestimmten Abstand oder die bestimmte Veränderung des Abstands zur Bodenebene (30) kontinuierlich anzupassen.

2. Flugzeugtreppe (10) nach Anspruch 1,
**dadurch gekennzeichnet,**
**dass** die Distanzmesseinrichtung (29) mit lediglich einem Distanzmessmittel, insbesondere einem optischen Messensor, zur Bestimmung der Veränderung des Abstands des Flugzeugrumpfs zur Bodenebene (30) bereitgestellt ist.

3. Flugzeugtreppe (10) nach einem der Ansprüche 1 bis 2,
**dadurch gekennzeichnet,**
**dass** die Distanzmesseinrichtung (29) auf derselben Seite an der Flugzeugtreppe (10) angeordnet ist wie die Plattform (13).

4. Flugzeugtreppe (10) nach einem der Ansprüche 1 bis 3,
**dadurch gekennzeichnet**,
die Distanzmesseinrichtung (29) an einer Verlängerung (24) befestigt ist, welche im angestellten Zustand unter den Flugzeugrumpf (25, 26) ragt, sodass eine Messung zwischen Distanzmesseinrichtung (29) und einer Unterseite (25', 26') des Flugzeugrumpfs ermöglicht ist.

5. Flugzeugtreppe (10) nach einem der Ansprüche 1 bis 4,
**dadurch gekennzeichnet, dass** die Flugzeugtreppe eine Kanzel umfasst und die Distanzmesseinrichtung (29) in einem Bereich des Rahmens (15), insbesondere an der Verlängerung, vorgesehen ist, welcher zumindest in dem Zustand, in dem die Flugzeugtreppe dem Flugzeug in betriebsgemäßer Ausrichtung, zugestellt ist, mit der Kanzel vertikal abschließt oder nach vorne übersteht.

6. Flugzeugtreppe (10) nach Anspruch 1 bis 4,
**dadurch gekennzeichnet,**
**dass** eine Messrichtung der Distanzmesseinrichtung (29) mit der Bodenebene (30) einen Winkel kleiner 90° in Richtung des Flugzeugrumpfs einschließt, wobei der Abstand, insbesondere eine Höhe (H, H'), oder die Veränderung des Abstands unter Berücksichtigung des Winkels (a) bestimmbar ist.

7. Flugzeugtreppe (10) nach einem der Ansprüche 5 und 6,
**dadurch gekennzeichnet,**
**dass** die Verstelleinrichtung (14), hydraulisch, pneumatisch oder mechanisch ausgebildet ist.

8. Flugzeugtreppe (10) nach Anspruch 4,
**dadurch gekennzeichnet,**
**dass** die Verlängerung (24) aus- und einfahrbar ist.

9. Flugzeugtreppe (10) nach einem der Ansprüche 4 oder 8,
**dadurch gekennzeichnet,**
**dass** die Verlängerung (24) in unterschiedlichen Positionen für eine Messung festlegbar ist.

10. Flugzeugtreppe nach einem der voranstehenden Ansprüche,
**dadurch gekennzeichnet,**
**dass** eine zweite Distanzmesseinrichtung vorgesehen ist, welche einen Abstand der Plattform von der Bodenebene bestimmt.

11. Flugzeugtreppe nach Anspruch 10,
**dadurch gekennzeichnet,**
**dass** die Steuereinrichtung ausgebildet ist, die Höhe der Treppe von der Bodenebene an einen gemessenen Abstand des Flugzeugrumpfs oder einer Einstiegsluke von der Bodenebene anzupassen.

12. Verfahren zur kontinuierlichen Anpassung der Höhe einer Plattform einer Flugzeugtreppe (10) aufweisend eine Distanzmesseinrichtung (29), welche in einem unteren, bodennahen Bereich der Flugzeugtreppe, nämlich an deren Rahmen (15) angeordnet ist und in einem Zustand, in dem die Flugzeugtreppe einem Flugzeug in betriebsgemäßer Ausrichtung zugestellt ist, von dem unteren Bereich aufwärts messend auf eine Untersetite des Flugzeugrumpfs ausgerichtet ist, bei welchem
- mittels der Distanzmesseinrichtung (29) kontaktfrei an einer Unterseite des Flugzeugrumpfs, welche dem Boden zugewandt ist, eine Veränderung des Abstands des Flugzeugrumpfs zur Bodenebene (30) bestimmt wird,
- eine Steuereinrichtung, die Verstelleinrichtung (14) ansteuert und weiter
- mittels einer Verstelleinrichtung die Höhe der Plattform (13) an den bestimmten Abstand oder die bestimmte Veränderung des Abstands zur Bodenebene (30) kontinuierlich angepasst wird.

## Claims

1. Aircraft staircase (10) with a platform (13) and
an adjusting device (14) which is designed to adjust the height of the platform (13) relative to a ground plane (30)
**characterised by**,
a distance measuring device (29), which is arranged in a lower region of the aircraft staircase close to the ground, namely on the frame (15) thereof, and is oriented towards an underside of the aircraft fuselage, measuring upwards from the lower region, in a state in which the aircraft staircase is arranged on an aircraft in operational alignment, to determine, without contact, on an underside of the aircraft fuselage facing the ground plane (30) a change in the distance of the aircraft fuselage from the ground plane (30), and
a control device which is designed to control the adjusting device (14) and is further designed to continuously adapt the height of the platform (13) to the determined distance or the determined change in the distance to the ground plane (30) by means of the adjusting device.

2. Aircraft staircase (10) according to claim 1,
**characterised in that**
**in that** the distance measuring device (29) is provided with only one distance measuring means, in particular an optical measuring sensor, for determining the change in the distance of the aircraft fuselage from the ground plane (30).

3. Aircraft staircase (10) according to any of claims 1 to 2,
**characterised in that**
that the distance measuring device (29) is arranged on the same side on the aircraft stairs (10) as the platform (13).

4. Aircraft stairs (10) according to any one of claims 1 to 3,
**characterised in that**
the distance measuring device (29) is attached to an extension (24) which, when in the attached position, projects under the aircraft fuselage (25, 26) so that a measurement between the distance measuring device (29) and an underside (25', 26') of the aircraft fuselage is conducted.

5. Aircraft staircase (10) according to any one of claims 1 to 4,
**characterised in that**
that the aircraft staircase comprises an upper platform and the distance measuring device (29) is provided in a region of the frame (15), in particular at the extension, which, at least in the state in which the aircraft stairs are advanced towards the aircraft in operational alignment, terminates vertically with the upper platform or protrudes forwards.

6. Aircraft staircase (10) according to claim 1 to 4,
**characterised in that**
**in that** a measuring direction of the distance measuring device (29) encloses an angle of less than 90° with the ground plane (30) in the direction of the aircraft fuselage, whereby a distance, in particular a height (H, H'), or the change in the distance can be determined taking into account the angle (a).

7. Aircraft staircase (10) according to any of claims 5 and 6,
**characterised in that**
that the adjustment device (14) is designed hydraulically, pneumatically or mechanically.

8. Aircraft staircase (10) according to claim 4,
**characterised in that**
that the extension (24) can be extended and retracted.

9. Aircraft staircase (10) according to any one of claims 4 or 8,
**characterised in that**
that the extension (24) can be fixed in different positions for a measurement.

10. Aircraft staircase according to any of the preceding claims,
**characterised in that**
that a second distance measuring device is provided which determines a distance of the platform from the ground level.

11. Aircraft staircase according to claim 10,
**characterised in that**
that the control device is designed to adjust the height of the staircase from the ground level to a measured distance of the aircraft fuselage or an access hatch from the ground level.

12. A method of continuously adjusting the height of a platform of an aircraft staircase (10) comprising a distance measuring device (29) located in a lower ground plane region of the aircraft stairway, namely on the frame (15) thereof, and aligned to measure upwardly from the lower region to a underside of the aircraft fuselage in a condition in which the aircraft stairway is oriented to an aircraft in operative alignment, wherein
- a change in the distance of the aircraft fuselage to the ground plane (30) is determined by means of the distance measuring device (29) without contact on an underside of the aircraft fuselage facing the ground,
- a control device which controls the adjustment device (14) and further
- by means of an adjustment device, the height of the platform (13) is continuously adjusted to the specific distance or the specific change in the distance to the ground level (30).

## Revendications

1. Escalier d'avion (10) muni d'une plateforme (13) et d'un dispositif de réglage (14) formé de sorte à adapter la hauteur de la plateforme (13) en face d'un niveau de sol est caractérisé de sorte qu'un dispositif de mesurage de distance (29) est disposé, à savoir au niveau de son cadre, dans la zone inférieure de l'escalier de l'avion au niveau du sol et est orienté vers la zone inférieure mesurant vers le haut vers une face inférieure de la coque de l'avion dans un état où l'escalier de l'avion est transmis vers un avion dans un alignement fonctionnel sans contact sur une face inférieure de la coque de l'avion et est tourné vers le niveau de sol (30) pour déterminer le changement de la distance de la coque de l'avion vers le niveau de sol (30) ainsi qu'un dispositif de commande formé de sorte à commander le dispositif de réglage (14) et à adapter à titre continu la hauteur de la plateforme (13) par le biais du dispositif de réglage à la distance donnée ou au changement donné de la distance vers le niveau de sol (30).

2. Escalier d'avion (10) selon la revendication 1 est caractérisé de sorte que le dispositif de mesuration de distance (29) est prévu avec seulement un moyen de mesuration de distance, en l'occurrence avec un capteur de mesuration optique, pour déterminer le changement de la distance de la coque de l'avion vers le niveau de sol (30).

3. Escalier d'avion (10) selon l'une des revendications 1 jusqu'à 2 est caractérisé de sorte que le dispositif de mesuration de distance (29) est disposé au même niveau que l'escalier d'avion (10) comme la plateforme (13).

4. Escalier d'avion (10) selon l'une des revendications 1 jusqu'à 3 est caractérisé de sorte que le dispositif de mesuration de distance (29) est fixé à un prolongement pénétrant en état en marche la coque de l'avion (25,26) de sorte qu'une mesuration est facilitée entre le dispositif de mesuration de distance (29) et une face inférieure (25,26) de la coque de l'avion.

5. Escalier d'avion (10) selon l'une des revendications 1 jusqu'à 4 est caractérisé de sorte que le dispositif de mesuration de distance (29) est prévu dans une zone du cadre (15), en l'occurrence au niveau du prolongement, qui se termine verticalement avec la chaire au minimum à l'état où l'escalier de l'avion est transmis vers l'avion en alignement fonctionnel ou pointant vers l'avant.

6. Escalier d'avion (10) selon l'une des revendications 1 jusqu'à 4 est caractérisé de sorte que la direction de mesuration du dispositif de mesuration de distance (29) inclut avec le niveau de sol (30) un petit angle 90° dans la direction de la coque de l'avion où la distance, en l'occurrence une hauteur (H, H'), ou le changement de la distance en tenant compte de l'angle (d), sont déterminables.

7. Escalier d'avion (10) selon l'une des revendications 5 ou 6 est caractérisé de sorte que le dispositif de réglage (14) est formé à titre hydraulique, pneumatique ou mécanique.

8. Escalier d'avion (10) selon la revendication 4 est caractérisé de sorte que le prolongement (24) est extensible et rétractable.

9. Escalier d'avion (10) selon l'une des revendications 4 ou 8 est caractérisé desorte que le prolongement (24) est immobilisable pour une mesuration dans différentes positions.

10. Escalier d'avion selon l'une des revendications précédentes est caractérisé de sorte qu'un deuxième dispositif de mesuration de distance est prévu qui détermine la distance entre la plateforme et le niveau de sol.

11. Escalier d'avion (10) selon la revendication 10 est caractérisé de sorte que le dispositif de commande est formé de sorte à adapter la hauteur de l'escalier du niveau de sol à une distance mesurée de la coque de l'avion ou à une trappe d'entrée du niveau de sol.

12. Procédé pour l'adaptation continue de la hauteur d'une plateforme d'un escalier d'avion (10) présentant un dispositif de mesuration de distance (29) disposé dans une zone inférieure à proximité du sol de l'escalier de l'avion, en l'occurrence au niveau de son cadre, dans un état où l'escalier de l'avion est transmis vers un avion en alignement fonctionnel orienté de la zone inférieure mesurée vers le haut sur la face inférieure de la coque d'avion où un changement
- de la distance de la coque de l'avion vers le niveau de sol (30) est déterminable sans contact au niveau de la face inférieure de la coque d'avion, orientée vers la sol, par le biais du dispositif de mesuration de distance (29),
- Un dispositif de commande guidant le dispositif de réglage (14) et par le biais du dispositif de réglage adapte la hauteur de la plateforme (13) à titre continu à une distance donnée ou à un changement donné de la distance du niveau de sol (13).
